# EUROPEAN PATENT SPECIFICATION

(11) **EP 1 983 627 B1**
(45) Date of publication and mention of the grant of the patent: **24.07.2019**
(21) Application number: 08006009.8
(22) Date of filing: 28.03.2008
(51) Int. Cl.: H02G 3/04

(54) **Wire protecting member and wire harness**
Kabelschutzanordnung und Kabelbündel
Dispositif de protection de cables et faisceau de cables

(30) Priority: 28.03.2007 JP 2007085585
(43) Date of publication of application: 22.10.2008
(73) Proprietor: YAZAKI CORPORATION, Minato-ku Tokyo 108-8333 (JP)
(72) Inventor: Atsuyoshi, Yamaguchi, Kosai-shi Shizuoka (JP)
(74) Representative: Grünecker Patent- und Rechtsanwälte PartG mbB

(56) References cited:
- EP-A2- 0 901 191
- WO-A1-93/14253
- FR-A1- 2 853 148
- US-A- 2 468 493
- US-A- 4 891 256
- US-A- 4 939 819

## Description

### BACKGROUND ART

The present invention relates to a wire protecting member particularly for a wire harness which can be made more lightweight.

Generally, a wire harness is mounted on a vehicle body, and therefore is, in some cases, installed in contact with an interfering object such as a metal edge portion of the vehicle body. And, it is expected that insulators of a group of wires within the wire harness are damaged by vibration of the metal edge portion of the vehicle body, thus causing a short-circuiting accident and a wire-cutting accident for the wire group. There are also occasions when the wire harness is installed not within the vehicle body but on the outside of the vehicle body for reasons of a design. In this case, it is expected that for example, a pebble or the like thrown up by a tire strikes directly against the wire harness, thus causing similar accidents as described above.

Therefore, there has been provided a wire harness in which a sheath portion of the wire harness is formed into an inner/outer two-layer structure, and a gap is formed between an outer sheath portion and an inner sheath portion, and the outer sheath portion slides, together with an interfering object, relative to the inner sheath portion so that the outer sheath portion will be hardly worn by the interfering object (see, for example, Patent Literature 1).

[Patent Literature 1] JP-A-2006-253072

Document US-A-4 939 819 discloses a wire protecting member for covering an outer periphery of a wire harness constituted of a mesh formed of polyolefin fibers.

Such a wire harness is excellent in wear resistance, and maintains a lightweight design. However, there has been a demand for a more lightweight design for reasons of energy conservation, easiness of a mounting operation, etc.

### SUMMARY

The present invention has been made in view of the above problem, and an object thereof is to provide a wire protecting member and a wire harness which can solve the above problem.

In order to solve the above problem, the present invention provides a wire protecting member for covering an outer periphery of a wire harness, comprising:
a mesh which is formed of reinforced polyolefin fibers, wherein a plurality of the meshes are stacked together, wherein an adhesive layer is provided on a surface of the mesh.

In the wire protecting member, preferably, a direction of the reinforced fibers in one mesh among the plurality of meshes is different from a direction of the reinforced fibers in other mesh.

According to the present invention, there is provided a wire harness protected by the above wire protecting member.

In the wire harness, preferably, an axial direction of the reinforced fibers of the mesh of the wire protecting member is oblique relative to a direction of extending of a plurality of wires forming the wire harness.

The wire protecting member of the present invention comprises the mesh of the reinforced fibers, and therefore can be made lightweight, and the wire harness made more lightweight with the use of this wire protecting member can be supplied.

### BRIEF DESCRIPTION OF THE DRAWINGS

Fig. 1A is a front-elevational view of an embodiment 1 of a wire protecting member of the present invention, and Fig. 1B is a right side-elevational view of the wire protecting member.
Figs. 2A to 2C are perspective views showing a procedure of winding and holding the wire protecting member of Fig. 1 onto a wire group.
Fig. 3 is a perspective view showing an installed condition (perpendicularly-intersecting) of a wire harness on a metal edge portion.
Fig. 4 is a front-elevational view of an embodiment 2 of a wire protecting member of the present invention.
Fig. 5 is a perspective view showing an installed condition (oblique) of a wire harness on a metal edge portion.
Fig. 6 is a front-elevational view of an embodiment 3 of a wire protecting member of the present invention.
Fig. 7 is a front-elevational view of an embodiment 4 of a wire protecting member of the present invention.
Fig. 8 is a front-elevational view of an embodiment 5 of a wire protecting member of the present invention.

### DETAILED DESCRIPTION OF EXEMPLARY EMBODIMENTS

Embodiments of the present invention will be described below with reference to the drawings.

### (Embodiment 1)

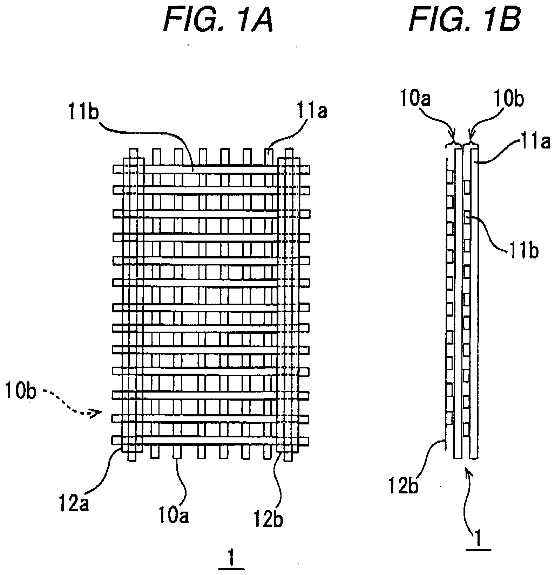

Figs. 1A and 1B are a front-elevational view and a right side-elevational view of a wire protecting member 1, respectively. This wire protecting member 1 is formed by two meshes 10 (10a, 10b) of reinforced fibers stacked together.

With respect to the stacking of the two meshes, the stacking is effected in such a manner that longitudinal split fibers 11a in the first mesh 10a are disposed parallel to longitudinal split fibers 11a in the second mesh 10b. With respect to fiber directions of lateral split fibers 11b, also, the stacking is made similarly. With this construction, there is formed the wire protecting member 1 having a protecting performance as a sheath of a wire harness.

Each mesh 10 is formed by a large number of longitudinal split fibers 11a (comprising reinforced fibers) and a large number of lateral split fibers 11b (comprising reinforced fibers) which intersect each other and are thermally fused together. For example, an oriented reinforced polyolefin is suitably used as this reinforced fiber since it is excellent in mechanical properties such as a tensile strength, a tear strength and so on, waterproof and moisture-proof properties and chemical resistance, and besides is very lightweight, and is economical.

A front-end adhesive tape portion 12a is bonded to a left end portion of a front face of the first mesh 10a, and a rear-end adhesive tap portion 12b is bonded to a right end portion of this front face.

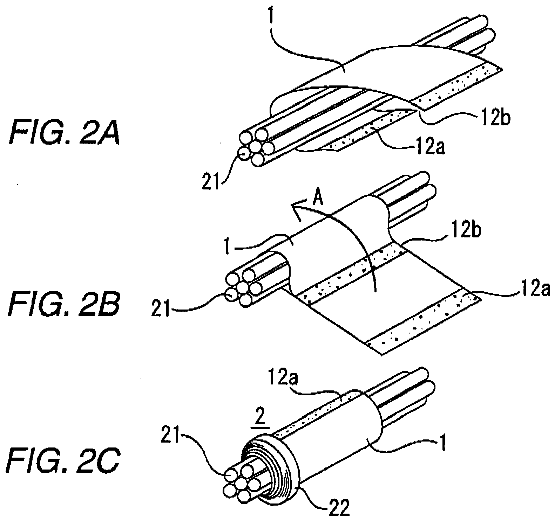

Next, a procedure of winding and holding this wire protecting member 1 on a wire group 21 comprising a large number of (for example, 6) wires bundled together will be described with reference to Figs. 2A to 2C.

First, as shown in Fig. 2A, the wire protecting member 1 is passed from this side over an upper portion of the wire group 21, and is folded back. Here, the adhesive tapes 12 are provided respectively at the opposite end portions of the wire protecting member 1, and therefore the front-end adhesive tape portion 12a is disposed at the obverse side (upper side in the drawings) of the folded-back surface, while the rear-end adhesive tape portion 12b is disposed at the reverse side (lower side in the drawings) of that portion of the wire protecting member disposed at this side.

Then, as shown in Fig. 2B, the wire protecting member 1 further folded back from this condition is pulled toward this side, and the rear-end adhesive tape portion 12b is bonded to a suitable portion of the folded-back surface.

After this rear-end adhesive tape portion 12b is bonded, the wire protecting member 1 is wound in a direction of arrow A relative to the wire group 21 from the bonded portion.

Finally, the wire protecting member 1 is wound on the wire group 21 as shown in Fig. 2C, and thereafter the front-end adhesive tape portion 12a is bonded, thereby holding the winding. Further, a vinyl tape 22 is wound on the end portion of this wire protecting member 1 from which the wire group 21 is exposed, thereby windingly holding this end portion. Here, the procedure of winding and holding this wire protecting member 1 on the wire group 21 is finished, and the wire harness 2 is completed.

The thus constructed wire harness 2 comprises the reinforced fiber meshes 10, and therefore can meet a more lightweight design. And besides, the large number of longitudinal split fibers 11a (of reinforced fibers) and the large number of lateral split fibers 11b (of reinforced fibers) which form the mesh 10 are formed by polyolefin fibers, and therefore meet the non-halogenation, and are friendly to environmental problems, etc., and are suitable.

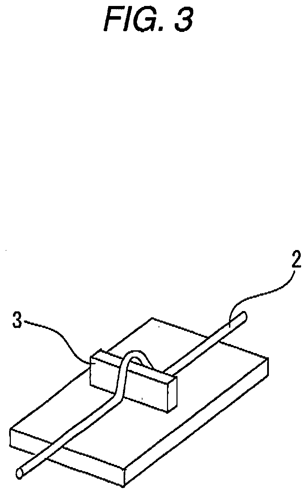

Furthermore, the construction is such that the meshes 10 are stacked in layers, and therefore the protecting performance can be enhanced. Namely, in the case where the thus constructed wire harness 2 is, for example, installed in contact with a metal edge portion 3 of a vehicle body in perpendicularly-intersecting relation thereto as shown in Fig. 3, the performance of protection for the inside wire group 21 can be enhanced even when the metal edge portion 3 or the wire harness 2 vibrates, since the wire protecting member 1 comprising the stacked meshes 10 covers the wire group 21.

### (Embodiment 2)

A wire protecting member 1 according to an embodiment 2 is an example in which with respect to the stacked structure of the plurality of reinforced fiber meshes 10 of the embodiment 1, the stacking is effected such that a fiber direction of longitudinal split fibers 11a in a first mesh 10a and a fiber direction of longitudinal split fibers 11a in a second mesh 10b are not parallel to each other but are different from each other (for example, oblique relative to each other). The other constituent portions are the same as those of the embodiment 1, and therefore will be designated by identical reference numerals, respectively, and detailed description thereof will be omitted.

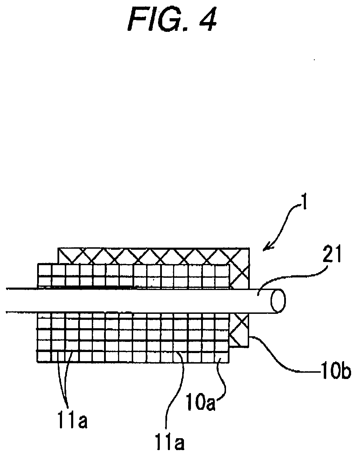

Fig. 4 shows the directions of the split fibers of the two meshes 10a, 10b forming the wire protecting member 1 as well as the positional relation of a wire group 21 on which this wire protecting member 1 is to be wound. It shows the case where the fiber direction of the longitudinal split fibers 11a of the second mesh 10b is not parallel to the direction of the longitudinal split fibers 11a of the first mesh 10a, but is oblique relative thereto, and an axial direction of the wire group 21 on which the wire protecting member is to be wound is perpendicular to the direction of the longitudinal split fibers 11a of the first mesh 10a.

The wire protecting member 11 is formed by these meshes 10a, 10b, and this wire protecting member 1 is wound relative to the wire group 21 as described above, thereby forming a wire harness 2.

The thus constructed wire harness 2 achieves the same advantages as in the embodiment 1 with respect to the meeting with a more lightweight design and also with respect to the non-halogenation, environmental problems, etc.

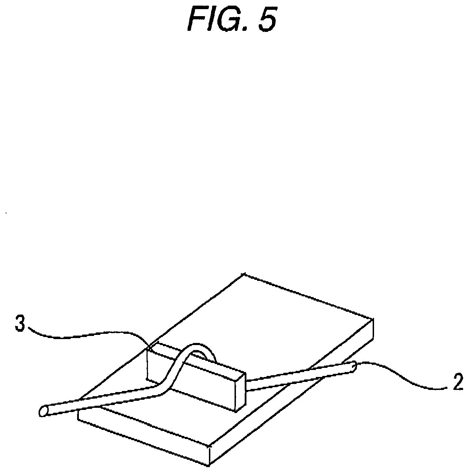

Furthermore, the construction is such that the meshes 10a, 10b different in the direction of the split fibers 11 are stacked in layers, and therefore the protecting performance can be enhanced regardless of a contact angle of the wire harness 2 interfering with an edge. Namely, in the case where the thus constructed wire harness 2 is, for example, installed in contact with the metal edge portion 3 of the vehicle body in perpendicularly-intersecting relation thereto as shown in Fig. 3, the performance of protection for the inside wire group 21 can be enhanced even when the metal edge portion 3 or the wire harness 2 vibrates, since the wire protecting member 1 comprising the stacked meshes 10 covers the wire group 21. Furthermore, in the case where the wire harness is installed in contact with a metal edge portion 3 of the vehicle body in an oblique direction thereto as shown in Fig. 5, the performance of protection for the inside wire group 21 can be enhanced even when the metal edge portion 3 or the wire harness 2 vibrates, since the directions of the split fibers 11 of the stacked meshes 10a, 10b are different from each other. Thus, with the wire protecting member 1 of this embodiment, the performance of protection for the inside wire group 21 against the interference from various directions can be enhanced.

### (Embodiment 3)

A wire protecting member 1 according to an embodiment 3 is an example which is formed by one mesh 10 in contrast with the stacked structure of the plurality of reinforced fiber meshes 10 of the embodiment 1. The other constituent portions are the same as those of the embodiment 1, and therefore will be designated by identical reference numerals, respectively, and detailed description thereof will be omitted.

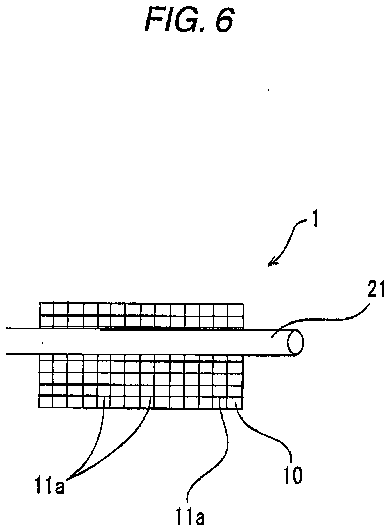

Fig. 6 shows the directions of split fibers of the mesh 10 forming the wire protecting member 1 as well as the positional relation of a wire group 21 on which this wire protecting member 1 is to be wound. It shows the case where the direction of the longitudinal split fibers 11a of the mesh 10 is perpendicular to an axial direction of a wire harness 2 on which the wire protecting member is to be wound.

The wire protecting member 1 is formed by this mesh 10, and this wire protecting member 1 is wound relative to the wire group 21 as described above, thereby forming the wire harness 2.

The thus constructed wire harness 2 comprises the reinforced fiber mesh 10, and does not have a stacked structure, and therefore as compared with the above-mentioned embodiments, its weight can be reduced by an amount corresponding to the weight of one mesh 10. In such a use in which greater importance is attached to the lightweight design of the wire harness 2 than to the protecting performance thereof, such a wire protecting member having no stacked structure is suitable.

Furthermore, with respect to the non-halogenation and environmental problems, etc., the same advantages as in the embodiment 1 are achieved.

### (Embodiment 4)

A wire protecting member 1 according to an embodiment 4 is an example in which an adhesive tape 12 as bonded to the front face of the reinforced fiber mesh 10 of the embodiment 1 is not provided at each of opposite end portions of a front face of a mesh 10, but is provided at one end portion of the front face of the mesh 10. The other constituent portions are the same as those of the embodiment 1, and therefore will be designated by identical reference numerals, respectively, and detailed description thereof will be omitted.

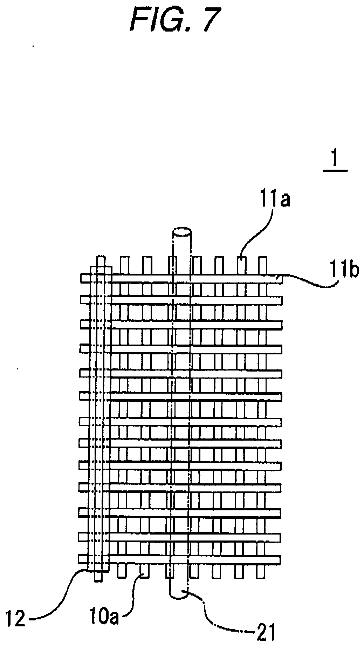

Fig. 7 shows the case where the adhesive tape 12 is provided at one end portion of the front face of the first mesh 10a forming the wire protecting member 1.

This mesh 10a and a second mesh 10b form the wire protecting member 1, and this wire protecting member 1 is wound relative to a wire group 21 as described above, thereby forming a wire harness 2.

In the thus constructed wire harness 2, the adhesive tape is used only at the one end portion, and therefore as compared with the embodiments 1 to 3, its weight can be reduced by an amount corresponding to the weight of one adhesive tape.

Furthermore, with respect to the non-halogenation and environmental problems, etc., the same advantages as in the embodiment 1 are achieved.

### (Embodiment 5)

A wire protecting member 1 according to an embodiment 5 is an example in which an adhesive tape 12 as bonded to the front face of the reinforced fiber mesh 10 of the embodiment 1 is not provided at each of opposite end portions of a front face of a mesh 10, but is provided on the whole of the front face of the mesh 10. The other constituent portions are the same as those of the embodiment 1, and therefore will be designated by identical reference numerals, respectively, and detailed description thereof will be omitted.

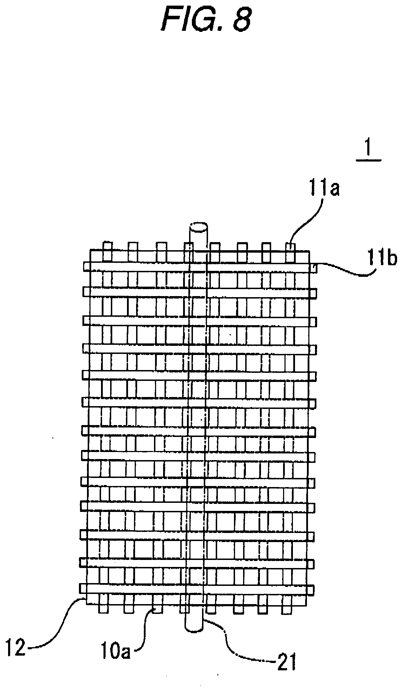

Fig. 8 shows the case where the adhesive tape 12 is provided on the whole of the front face of the first mesh 10a forming the wire protecting member 1.

This mesh 10a and a second mesh 10b form the wire protecting member 1, and this wire protecting member 1 is wound relative to a wire group 21 as described above, thereby forming a wire harness 2.

In the thus constructed wire harness 2, the adhesive tape is bonded to the whole of the front face, and therefore the winding/holding function can be fully performed. Therefore, the vinyl tape 22 windingly holding the end portion of the wire protecting member 1 from which the wire group 21 is exposed becomes unnecessary. Therefore, the weight is reduced by an amount corresponding to the weight of the vinyl tape as compared with the embodiments 1 to 4.

Furthermore, with respect to the non-halogenation and environmental problems, etc., the same advantages as in the embodiment 1 are achieved,

### (Other embodiments)

In the above embodiments 1 to 5, although the fiber direction of the wire protecting member 1 to be wound on the wire group 21 is perpendicular or parallel, this direction may be oblique. Even in the case where the thus constructed wire harness 2 is, for example, installed in contact with the metal edge portion 3 of the vehicle body in an oblique direction thereto, it can maintain the protecting performance.

Furthermore, in the above embodiments, although the oriented reinforced polyolefin fiber has been described, it is not limited to the polyolefin fiber if the lightweight design, economy, strength, etc., can be secured. Furthermore, in such a use in which greater importance is attached to the lightweight design of the wire harness 2 than to the protecting performance thereof, fibers which are not oriented and reinforced may be used.

Furthermore, in the above embodiments, although there have been described the case where one to two meshes 10 forming the wire protecting member 1 are used, but in such a use in which greater importance is attached to the protecting performance of the wire harness 2 than to the lightweight design thereof, three or more are used, and by doing so, the protecting performance can be further enhanced.

In the above embodiments, although the adhesive tape 12 is used as the adhesive layer, it may be replaced by an adhesive, synthetic glue, tying band, etc.

## Claims

1. A wire protecting member for covering an outer periphery of a wire harness, comprising:
a mesh which is formed by polyolefin fibers, wherein a plurality of the meshes are stacked together, wherein an adhesive layer is provided on a surface of the mesh.

2. The wire protecting member according to claim 2, wherein a direction of the reinforced fibers in one mesh among the plurality of meshes is different from a direction of the reinforced fibers in other mesh.

3. A wire harness protected by the wire protecting member according to claim 1.

4. The wire harness according to claim 3, wherein an axial direction of the reinforced fibers of the mesh of the wire protecting member is oblique relative to a direction of extending of a plurality of wires forming the wire harness.

## Patentansprüche

1. Kabel-Schutzelement zum Abdecken eines Außenumfangs eines Kabelbaums, das umfasst:
ein Netz, das aus Polyolefin-Fasern besteht, wobei eine Vielzahl der Netze übereinandergeschichtet sind, und eine Klebstoffschicht an einer Oberfläche des Netzes vorhanden ist.

2. Kabel-Schutzelement nach Anspruch 2, wobei sich eine Richtung der verstärkten Fasern in einem Netz der Vielzahl von Netzen von einer Richtung der verstärkten Fasern in einem anderen Netz unterscheidet.

3. Kabelbaum, der durch das Kabel-Schutzelement nach Anspruch 1 geschützt ist.

4. Kabelbaum nach Anspruch 3, wobei eine axiale Richtung der verstärkten Fasern des Netzes des Kabel-Schutzelementes schräg zu einer Richtung ist, in der eine Vielzahl von Kabeln verläuft, die den Kabelbaum bilden.

## Revendications

1. Élément de protection de câblage servant à recouvrir la périphérie externe d'un faisceau de câbles, comprenant :
un maillage constitué de fibres polyoléfines, dans lequel plusieurs maillages sont empilés, dans lequel une couche adhésive est pourvue sur une surface du maillage.

2. Élément de protection de câblage selon la revendication 2, dans lequel la direction des fibres renforcées dans un maillage parmi la pluralité de maillages est différente de la direction des fibres renforcées dans un autre maillage.

3. Faisceau de câbles protégé par l'élément de protection de câblage selon la revendication 1.

4. Faisceau de câbles selon la revendication 3, dans lequel la direction axiale des fibres renforcées du maillage de l'élément de protection de câblage est oblique par rapport à la direction d'extension d'une pluralité de câbles formant le faisceau de câbles.
